# EUROPEAN PATENT APPLICATION

(11) **EP 2 813 983 A1**
(43) Date of publication of application: **17.12.2014**
(21) Application number: 13305785.1
(22) Date of filing: 11.06.2013
(51) Int. Cl.: G06Q 10/10, G06Q 50/00, G06F 17/30, G06F 3/0481

(54) **Method and system for managing social interactions in a social multimedia content stream**

(71) Applicant: ALCATEL LUCENT, 92100 Boulogne-Billancourt (FR)
(72) Inventor: Picault, Jerome, 91620 Nozay (FR); Ribiere, Myriam, 91620 Nozay (FR); Hebbar, Abdelkrim, 91620 Nozay (FR); Gaste, Yann, 91620 Nozay (FR)
(74) Representative: Novagraaf Technologies

(57) **Abstract**

A method for managing social interactions in a conversational space, the method comprising the following steps:
- receiving a plurality of social interactions;
- grouping together similar social interactions into clusters, these clusters being representative of topics of conversations;
- generating a conversational state based on the results of the clustering step;
- computing the evolution over time of the conversational trends in each cluster based on the generated conversational state;
- selecting filtering rules based on the conversational trend in each cluster;
- selecting display rules based on the conversational trend in each cluster;
- adjusting a presentation of the topics of conversations by applying the selected display rules and filtering rules.

## Description

### FIELD OF THE INVENTION

The present invention relates to the technical field of live topical presentation of microblog social interactions in relationship with a multimedia content.

### BACKGROUND OF THE INVENTION

By the term "presentation" means here broadly and not restrictively a way of displaying, exposing, combining, organizing a set of information so that a user is able to easily follow them.

The term "microblog" refers here to means allowing the users to exchange or share with other users, small elements of multimedia content such as short text, individual pictures, embedded videos or any links relating to an information source. Among famous microblogging services, one can note, for instance, Tumblr®, Tweeter®, FriendFeed® or Jaiku®.

"Social interactions" or "social messages" refer here to social content such as information, comments or ideas created, shared, and exchanged in a "conversational space" such as microblogging, social networks or any other discussion spaces. In the context of microblogging, "social interactions" may be for instance interpreted as microposts.

"Social streams" or "social conversations" refer here to set/subset of "social interactions" or "social messages".

For instance, a "social stream" can be formed of a set of "social interactions". Moreover, if the "social interactions" are converging to similar topics or subjects of conversations/discussions between groups of people such as microblogging users, the set of "social interactions" may form a "social conversation".

"User equipment" designates here any device able to connect to a network (tablet, Smartphone, computer).

Several studies (http://blog.nielsen.com/nielsenwire/online mobile/in-the-u-s-tablets-are-tv-buddies-while-ereaders-make-great-bedfellows/, http://www.futuresource-consulting.com/living with digital.pdf , http://www.emarketer.com/Article.aspx?R=1008301 "*What Do TV-Social Media Multitaskers Talk About?"*) show a clear tendency for people to use an additional user equipment (such as Smartphone, tablet, laptop) while watching television.

The use of a second screen, while watching the television, is a change of habits: people are much more using social services (such as Facebook® and Twitter®) to react to what they are watching; and other people are more and more curious to look at these extra information while they are watching TV, even if they are not directly involved in the commenting process.

The Diffusion Group (*TDG*) has just released a study entitled *"Social TV: Myths*, *Facts, and the Future*"*.* The TDG research shows that live events such as the Olympics, the Grammy's, and sports events spawned an increase in awareness of social TV.

Twitter® seems to be the most popular way for viewers to reach out to one another. By including a hashtag (#) in their tweets, a Twitter® search can gather comments in a Twitter® stream creating a type of community conversation. In fact, TDG credits Twitter® for the rise in social TV interaction.

Twitter® nearly doubled its user base in 2012. As importantly, Twitter® was used during major events, particularly in connection with the London Olympics and 2012 US presidential election. The Presidential debates, in particular, were a major event in Twitter® land, attracting over four million uniques but equally importantly generating nearly 28 million Tweets.

Such additional social content may be extremely valuable for users, as it may contain for instance opinions, links to relevant additional information sources. Therefore, presenting social interactions (such as Tweets or Facebook® comments) during a TV show, or more generally during any event situations, is something useful to users.

However, due to the high number of such social interactions during such events, it is not possible to present the full set of social interactions to a user (otherwise the huge volume of social interactions around a content piece may be a source of loss of attention with respect to the event).

There is a need to organize it in a smart way, so that the user can follow them easily based on his interests.

The need of filtering is also important to consider when considering TV events that can be viewed in a replay mode, where there is still a possibility to synchronize all tweets provided in the different replay or diffusion session to form a complete conversations.

So, the problem to solve is how to filter out social streams during an event to keep user's attention to the event and related information provided by people.

So far, solutions for filtering social interactions are rather poor: they are either based on simple filtering (based on hashtags or other microblogs metadata such as links; or on keywords; or on people who posted the comments, such as the system of followers on Twitter®), or rely on personalization techniques (i.e. filtered based on the user profile, which is not adapted to new content or changes of habits).

Hence, these solutions are not precise and accurate enough to really fulfill the user needs.

Moreover, none of these solutions categorize social interactions into topics of conversation/discussion, filter in real-time live social streams of interactions, or detect dynamically new topic of discussions within live social streams. Particularly, no existing solution enables to filter the social messages/interactions associated to an event in function of the dynamics of the evolution of topics over time.

One object of the present invention is to provide a solution to the aforementioned problems, and offers other advantages over the prior art.

Another project of the present invention is to address the problem of filtering out social streams during an event, so as to users can always keep attention to the event and get related information provided by people.

Another object of the present invention is to organize and filter in real-time social streams associated to a social multimedia content stream in a more logical way, on the basis of indicators describing the dynamics in terms of novelty (or not) of discussions (i.e. conversation topics) related to an event.

Another object of the present invention is to show to the user how new social interactions/comments are useful with respect to the previous ones: in particular, if they are contributing to a continuity of conversation topics, or if they are bringing alternative point of view on the same topics or to new topics of discussion.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods for managing social interactions in a conversational space, the methods comprising the following steps:
- receiving a plurality of social interactions;
- grouping together similar social interactions into clusters, these clusters being representative of topics of conversations;
- generating a conversational state based on the results of the clustering step;
- computing the evolution over time of the conversational trends in each cluster based on the generated conversational state;
- selecting filtering rules based on the conversational trend in each cluster;
- selecting display rules based on the conversational trend in each cluster;
- adjusting a presentation of the topics of conversations by applying the selected display rules and filtering rules.

In accordance with a broad aspect, synchronization step is performed between a displayed multimedia content and a displayed presentation of topics of conversations.

Further, various embodiments relate to systems for managing social interactions in a conversational space, the systems comprising the following modules:
- an Online Social Stream Clusterization module configured to receive a plurality of social interactions, and grouping together similar social interactions into clusters, these clusters being representative of topics of conversations;
- a Conversational State Extractor module configured to generate a conversational state based on the results of the clustering step;
- a Trends Analyzer module configured to compute the evolution over time of the conversational trends in each cluster based on the generated conversational state;
- a Social Message Selector module associated with a Social messages selection rules database, the said module being configured to select filtering rules based on the conversational trend in each cluster;
- a Social Messages Display module configured to select display rules based on the new generated conversational state, and to adjust a presentation of the topics of conversations, by applying the selected display rules and filtering rules.

Various embodiments further relate to computer program products for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawing in which
- FIG. 1 is a schematic diagram illustrating a functional architecture of an embodiment for a live topical presentation of social interactions in relationship with a social multimedia content stream;
- FIG.2 is a flow chart of an embodiment for a live topical presentation of social interactions in relationship with a social multimedia content stream.

### DETAILED DESCRIPTION OF ILLUSTRATIVE EMBODIMENTS

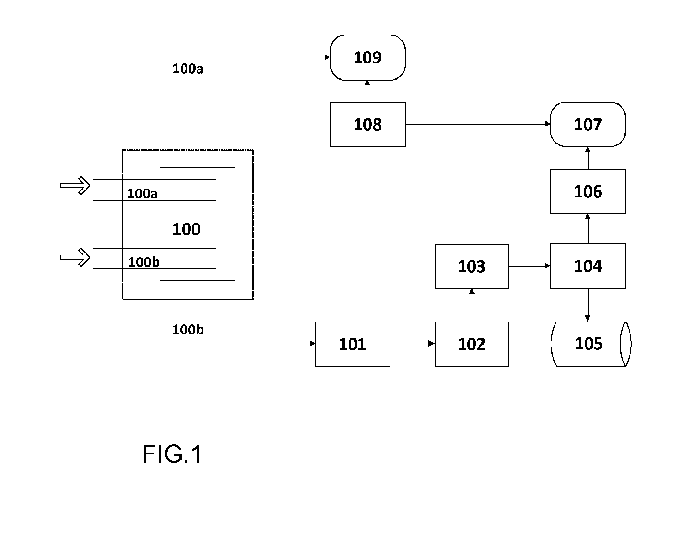

With reference to figure 1, the presented architecture details the components of one embodiment, permitting the management in real time of the conversations (i.e. social streams, social interactions) associated to a multimedia content such as a video stream.

The considered context is a social multimedia content stream **100,** comprising a multimedia content **100a** such as a live or "replay" video stream associated to an event, and a social interactions **100b** content provided by microblogs users, for instance users conversations or comments.

A Multimedia rendering device **109** receives and displays the multimedia content **100a** on a first screen device such as a TV screen. The device **109** may be any user equipment comprising means to display the multimedia content **100a** such as a TV, a computer, a tablet, a Smartphone or a computer.

An Online Social Stream Clusterization module **101** is in charge of receiving social interactions **100b** and grouping together similar social interactions into clusters.

In the present invention, clusters of interactions are representative of the topics of discussions/conversations related to an event.

The number of clusters is not set a priori, and can dynamically evolve over time: new clusters can be created, others can be split or merged.

To do so, a clustering process is performed. This process may be iterative and works with a stream excerpt of social interactions. A clustering iteration step may be triggered at regular intervals for instance at specific time intervals (ex. every 5 minutes), or when the amount of new social interactions since a last step exceeds a certain threshold (ex. every 500 tweets).

For each iteration of the clustering process, a similarity metric is defined between pairs of social interactions. Similarity metric refers here to means for measuring converging criterions between different information, here social interactions **100b** provided by microblogs users.

In a preferred embodiment, this similarity metric may be the cosine similarity between the vectors of keywords describing each social interaction.

These vectors of keywords are obtained by a process of keyword-extraction, preferably using part-of-speech tagging to keep only nouns from social interactions.

In one embodiment, each social interactions is associated with a time-sensitive weight, to ensure that recent social interactions are assigned with a greater importance than older social interactions.

Thus, to each social interaction is associated a fading function f(t) that decreases uniformly with time t. An example of such a function is f(t)=2^{-λt}, where λ represents the half-life of the function.

One advantage of introducing such a function is scalability, which allows the clustering algorithm to work roughly with a constant amount of data over time, regardless of new incoming social interactions.

Thus, when a new cluster is created by a new social interaction, it is allowed to remain a trend-setting outlier during one half-life.

If more social interactions arrive, the cluster becomes active; otherwise it is recognized as a true anomaly and is removed from the list of current clusters.

In one embodiment, the Online Social Stream Clusterization module **101** may rely on existing methods, such as:
- online spherical k-means algorithm OSKM (*[*S. Zhong, Efficient Streaming Text Clustering. Neural Networks, vol. 18, 2005*]*);
- the method described in *[*C.C. Aggarwal, P.S. Yu. A Framework for Clustering Massive Text and Categorical Data Streams, SIAM Conference on Data Mining, 2006*]* to build clusters from the social interaction contents.

Each time the clustering process is executed, a Conversational State Extractor module **102** generates a conversational state with a new set of social conversations composed of social interactions. A conversational state is described by:
- the number of clusters created from the social stream of interactions also identified as topics of conversation;
- the description of each cluster, which comprises:
   ○ the set of keywords identifying the topic;
   ○ the size of the cluster characterized as the number of annotations or social contributions that has been classified into this cluster. The size of the cluster is an indicator of the importance of the topic.
- the set of events that occurred during the previous clustering iteration:
   ○ new cluster apparition: this event corresponds to the apparition of a new topic of discussion;
   ○ fusion of two clusters: this event is associated to converging social conversations topics;
   ○ disappearance of one cluster: this is event related to a past conversation topic.

The conversational state contains two kinds of information that are used by different modules:
- the information on the clusters, their number and their characteristics. These information are used by a Conversational Trends Analyzer module **103** to compute the evolution over time of the conversational trends in each cluster: growing, stable or narrowing conversational topics. Such trends are used in a Social Message Selector module **104** to apply a percentage of messages to display from the different conversational topics.
- the information on events that occur when an iteration of the clustering algorithm is done in the Online Social Stream Clusterization module **101.** Such information are used by a Social Messages Display module **106** to choose how to display messages that have been classified in a new topic and how to display messages coming from the fusion of two topics (i.e. clusters) and how to inform users about the end of a conversation.

Following the computing of a new conversational state, a Conversational Trends Analyzer module **103** analyzes the differences between the new status of the conversational state and the previous one.

In another embodiment, the Conversational Trends Analyzer module **103** can analyze the differences between the new status and the sequence of previous conversational states.

From the analysis based on the description of each cluster of the conversational state, the module **103** can deduce since the last update the activity of each topic, i.e. if some conversations are:
- growing if the number of social interactions categorized in some already existing clusters are growing;
- some are reducing if the number of social interactions in some already existing clusters are decreasing;
- some are stable if staying with the same level of social interactions in some already existing clusters.

Accordingly, based on a new computed conversational state, the trend of each active topic/cluster is evaluated since the last update of the Conversational Trends Analyzer module **103.**

As a result, the Conversational Trends Analyzer module **103** indicates to the Social message selector module **104,** the trends in the conversational space for each cluster and the events that occurred in the new state of conversation.

The Social Message Selector module **104** is associated with a Social messages selection rules database **105.**

The Social Message Selector module **104** relies on the trends in each cluster, to apply filter rules stored in the database **105,** to select in the set of new social interactions:
- a percentage corresponding to growing topics of discussions;
- a percentage corresponding to background conversations that are considered as stable topics of discussions;
- a percentage corresponding to narrowing/converging topics of discussions.

The Social Message Selector module **104** also studies the events that occur in the new status of conversations to present for new topic a percentage of social conversations corresponding to a new topic.

In a preferred embodiment, the "most central" new messages in the cluster that are the most representative, are selected.

Then a Social Messages Display module **106** uses the events described in the new conversational state, to adjust differently the display of the different topics based on creation of new topics, fusion of topics, disappearance of one or several topics.

Hence, the Social Messages Display module **106** uses the description of the cluster in the computed conversational state to select display rules and to indicate to the user in an adapted graphical way the changes that occur in people conversations. For example, a second screen display of a user equipment may have dedicated display areas for each category among new, stable or growing topics.

As a result, based on the set of display rules and the set of selected social interactions, the Social Messages rendering device **107** displays the selected messages on the adapted display areas on the second screen device.

In one embodiment, the first and second screen devices may be the same physical device for instance a computer screen.

Finally, a streams synchronization module **108** synchronizes, on the basis of the timeline, the social interactions **100b** and the multimedia content **100a,** and enables the multimedia rendering device **109** and the second screen rendering device **107** to be synchronized in their display.

In one embodiment the synchronization between the streams can be based on a mechanism as described in the Alcatel Lucent ® patent application EP- 13155839 (*Device For Controlling Synchronization Of A Set Of Data Contents With A Multimedia Content, And Device For Retrieving Said Data Contents For An Equipment)* filed on Feb 19, 2013. In fact, this document describes means for providing communication equipments with data contents to be stored, transferred and displayed with associated multimedia contents. To do so, data contents associated to multimedia contents are collected and organized to produce a data content channel and associated channel information. The data content channel is divided into data blocks depending on the associated channel information. Indexes are respectively associated to these data blocks. Then, a file is produced comprising the indexes, the data blocks and first and second information describing respectively the file and these data blocks. If communication equipments request a multimedia content, first information describing at least one file associated to a multimedia content are retrieved. Indexes of each file described by the retrieved first information are, then, downloaded. Accordingly, at least one data block associated to a downloaded index can be downloaded on demand. The downloaded indexes and channel information associated to the file are analyzed on demand of the communication equipments, to determine each data block to be downloaded at a chosen time. Finally, each downloaded data block is provided, on demand and at chosen time, to the communication equipments so that data contents that it comprises could be analyzed and displayed.

In another embodiment this synchronization can be performed via ad hoc means.

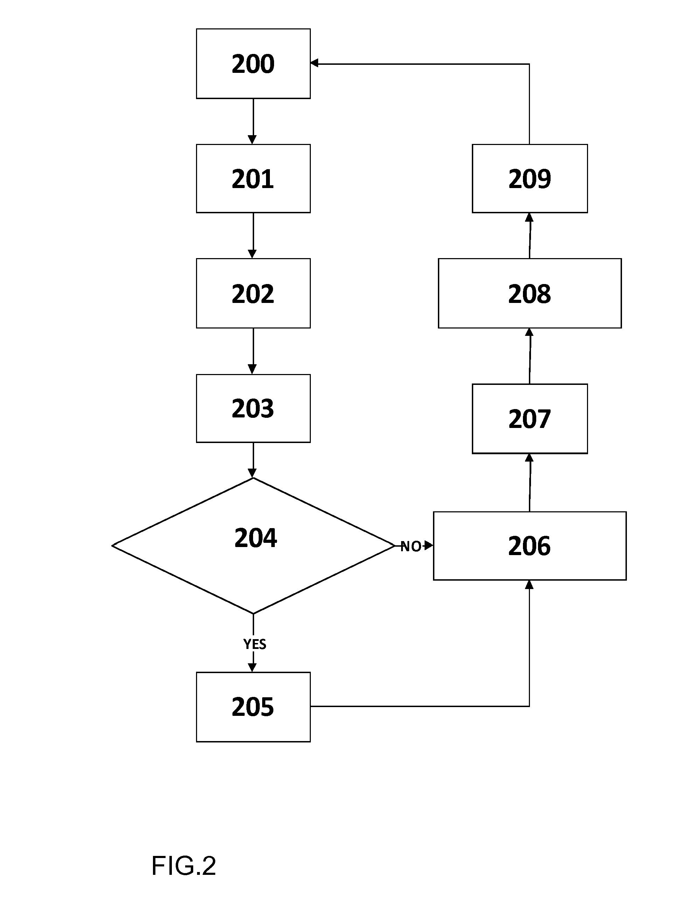

The flow chart in Figure 2 shows the process used to select social interactions via filter rules, and display rules for a final rendering on a user screen device. The steps in the process are as follows:

From an initial conversational state (step **200),** the system receives at least one social interaction (step **201).**

By an initial conversational state is meant here, an already established conversational state, described by a set of information comprising
- a pre-existing number of clusters, representative of topics of conversation, created from a social streams of interactions;
- a description of each clusters (keywords identifying the topics of conversation , size of the clusters);
- a set of events that occurred during a previous clustering iteration (apparition, fusion or disappearance of one cluster).

For instance the initial conversational state may be described:
- either with a set of default information if none social interaction has been received yet;
- either with a set of information based on a previous reception of at least one social interaction content.

Once the system has reached a limit, for instance, in time between two clustering iterations, or in number of social interactions between two clustering iterations, the system runs an online clustering iteration step (step **202),** in charge of grouping together similar social interaction contents into clusters.

The said clusters are representative of the topics of conversations/discussions related to an event. Thus the reception of a new social interaction referring to a new topic of conversation/discussion may create a new cluster. The creation of a cluster may be considered by the system as an outlier, if during a set period of time none additional interaction referring to this cluster is received. In this case, this cluster may be removed from the list of the current clusters. As an example, the set period of time may be implemented by a fading function as described previously. At the opposite, if more social interactions referring to this cluster are received, this cluster may be considered as "active", meaning to be considered as relevant in terms of topic in the list of current clusters and accordingly to be maintained in this list.

Once the clustering step is finished, a new conversational state is generated by the system (step **203)** based on the clustering step results.

Depending of the new generated conversational state, if conversational events are detected (step **204)** such as apparition of new cluster, fusion of two clusters, or disappearance of one cluster, the system selects display rules based on the different events (step **205**).For instance, one rule could be to display on the left corner messages associated to new clusters.

In any case, based on the new generated conversational state of step **203,** the system computes i.e. estimates for each active topics corresponding to clusters, the trends in the conversational space since the last update in the Conversational Trends Analyzer module **103.** Then, based on the said estimated trends of each cluster, the system selects filter rules (step **206).**

Then, the system uses the results of step **205** if necessary to adjust (step **206)** on a user equipment screen the presentation of topics, based on variations of discussions. For instance by applying filter rules (step **207)** and display rules (step **208).**

Finally the system applies a fading function (step **209)** to remove social interactions from the overall set of social interactions and make possible the disappearance or fusion phenomenon in the clustering process.

In one embodiment, the above-described method can also be used in a "replay" mode, as the need of filtering is also important to take into account when considering TV events that can be viewed in a replay mode. Hence, there is still a possibility to synchronize all social interactions provided in the different replay or diffusion session to form a complete conversation.

In one embodiment, the disclosed method may be integrated into a MVP (*Multi Screen Video Plateform*) Alcatel Lucent® product which creates, manages and monetizes advanced video and Pay-TV services and delivers them to more subscribers, devices and locations.

Advantageously, the above-described method permits an enriched social user experience, allowing the connection of the content experience, such as multimedia event, to social communities and conversations.

Advantageously, the described solution permits to categorize in real-time social interactions into topics and to detect novelty in a stream of interactions, triggering presentation rules accordingly.

More specifically, it provides insights into conversations that add value to events such as live multimedia content, instead of constituting a loss of attention to the multimedia content of a first screen.

Advantageously, the disclosed embodiments enable to filter the social messages associated to a multimedia event in function of the dynamics of the evolution of topics over time.

Further, the disclosed embodiments are, advantageously efficient to provide user interests with relevant social interactions regarding the dynamics of conversations inside one event.

Accordingly, the above-described method and system permit to produce a fine-grained and temporally adapted understanding of messages to identify changes of topics and derive an adapted presentation.

## Claims

1. A method for managing social interactions in a conversational space, the method comprising the following steps:
- receiving a plurality of social interactions;
- grouping together similar social interactions into clusters, these clusters being representative of topics of conversations;
- generating a conversational state based on the results of the clustering step;
- computing the evolution over time of the conversational trends in each cluster based on the generated conversational state;
- selecting filtering rules based on the conversational trend in each cluster;
- selecting display rules based on the conversational trend in each cluster;
- adjusting a presentation of the topics of conversations by applying the selected display rules and filtering rules.

2. The method of claim 1 wherein the conversational space is a microblogging service.

3. The method of claim 1 or 2, wherein the conversational state is **characterized by** the number of clusters, a description of each cluster and a set of events occurred during the clustering iteration step.

4. The method of the preceding claim wherein the said events are apparition of cluster, fusion of cluster, disappearance of cluster.

5. The method of claim 3 or 4 wherein the selection of the display rules is function of the detection of the said events.

6. The method of any of the preceding claims wherein the computing of the trends is performed by analyzing the differences between the generated conversational state and a previously generated one.

7. The method of any of the preceding claims wherein the filter rules select percentages of social interactions corresponding, respectively, to growing topics of conversations, stable topics of conversations, and converging topics of conversations.

8. The method of any of the preceding claims, wherein each social interaction is associated with a time-sensitive weight.

9. The method of the preceding claim, wherein the time-sensitive weight is used to group or remove social interactions.

10. The method of any of the preceding claims, wherein a synchronization step is performed between a displayed multimedia content (**100a**) and a displayed presentation of topics of conversations.

11. The method of the preceding claim, where the synchronization step may be performed during a live or replay diffusion of the multimedia content (**100a**).

12. A system for managing social interactions in a conversational space, the system comprising the following modules:
- an Online Social Stream Clusterization module (**101**) configured to receive a plurality of social interactions, and grouping together similar social interactions into clusters, these clusters being representative of topics of conversations;
- a Conversational State Extractor module **(102)** configured to generate a conversational state based on the results of the clustering step;
- a Trends Analyzer module **(103)** configured to compute the evolution over time of the conversational trends in each cluster based on the generated conversational state;
- a Social Message Selector module **(104)** associated with a Social messages selection rules database **(105),** the said module being configured to select filtering rules based on the conversational trend in each cluster;
- a Social Messages Display module **(106)** configured to select display rules based on the new generated conversational state, and to adjust a presentation of the topics of conversations, by applying the selected display rules and filtering rules.

13. The system of claim 12, further comprising a streams synchronization module **(108)** configured to synchronize a displayed multimedia content **(100a)** and a displayed presentation of topics of conversations.

14. The system of claim 12-13, where a Multimedia rendering device **(109)** is configured to display a multimedia content **(100a)** and a Social Messages rendering device **(107)** is configured to display a presentation of topics of conversations.

15. Computer program implemented on a processing unit of a computer, the program including code sections for performing instructions corresponding to the steps of a method according to any of claims 1-11.
